# EUROPÄISCHE PATENTSCHRIFT

(11) **EP 1 351 994 B1**
(45) Veröffentlichungstag und Bekanntmachung des Hinweises auf die Patenterteilung: **10.05.2006**
(21) Anmeldenummer: 01272038.9
(22) Anmeldetag: 20.12.2001
(51) Int. Cl.: C08B 37/00, B01D 35/06, B03C 5/00

(54) **ELEKTROFILTRATION VON BIOPOLYMEREN**
ELECTROFILTRATION OF BIOPOLYMERS
ELECTROFILTRATION DE BIOPOLYMERES

(30) Priorität: 22.12.2000 DE 10064298
(43) Veröffentlichungstag der Anmeldung: 15.10.2003
(73) Patentinhaber: Posten, Clemens, 76229 Karlsruhe (DE); Herrenbauer, Michael, 65931 Frankfurt (DE); Weber, Karsten, 76297 Stutensee (DE); Hofmann, Ralph, 76131 Karlsruhe (DE); Lenser Filtration GmbH & Co. Filterelemente, 89250 Senden (DE)
(72) Erfinder: Posten, Clemens, 76229 Karlsruhe (DE); Herrenbauer, Michael, 65931 Frankfurt (DE); Weber, Karsten, 77736 Zell a. H. (DE)
(74) Vertreter: Kehl, Günther
(86) Internationale Anmeldenummer: PCT/EP2001/015151
(87) Internationale Veröffentlichungsnummer: WO 2002/051874

(56) Entgegenhaltungen:
- WO-A-92/21433
- DE-A- 3 627 743
- DE-A- 4 102 156
- DE-B- 1 205 491
- JP-A- 59 171 850
- CHEMICAL ABSTRACTS, vol. 130, no. 22, 31. Mai 1999 (1999-05-31) Columbus, Ohio, US; abstract no. 298524m, PARK YOUNG-GYU: "Separation of large ionic molecules by electrofiltration." Seite 848; XP002195630 & J. KOREAN ELECTROCHEM. SOC., Bd. 1, Nr. 1, 1998, Seiten 18-23,
- FILTRIEREN UND SEPARIEREN, Bd. 14, Nr. 2, 2000, Seiten 58-63,

## Beschreibung

### Technisches Gebiet

Die vorliegende Erfindung betrifft ein Verfahren zur Abtrennung von Biopolymeren aus einer Flüssigkeit, welches einen Filtrationsschritt aufweist, sowie einen Filterapparat zur Abtrennung einer dispersen Phase, insbesondere von Biopolymeren, aus einer Flüssigkeit.

### Stand der Technik

Eines der industriell bedeutendsten Biopolymere ist das Polysaccharid Xanthan. Ein bisher übliches Verfahren zur Abtrennung von Xanthan wird in *Lo Y.-M., Yang S.-T., Min D. B.: Ultrafiltration of Xanthan Gum Fermentation Broth: Process and Economic Analysis, Journal of Food Engineering, 32, 219-237 (1997)* beschrieben. Eine xanthanhaltige Biosyspension wird mit Hilfe einer Ultrafiltrationseinheit aufkonzentriert und mit Isopropanol versetzt, um das Xanthan auszufällen. Bei der Ultrafiltration handelt es sich üblicherweise um eine Querstromfiltration, d.h. die Hauptbewegungsrichtung der Suspensionsflüssigkeit erfolgt "quer" zur Filtrationsrichtung, also im wesentlichen parallel zum Filtermedium. Dies ist erforderlich, um das Filtermedium vor Verblockungen und Verstopfungen - sogenanntem Membran-Fouling - zu bewahren, welche die Permeabilität des Filtermediums stark verringern und die Filtration zum fast vollständigen Erliegen bringen könnten. Den Großteil der auf die Ultrafiltration entfallenden Betriebskosten liefert der Energieverbrauch der für die Flüssigkeitsbewegung erforderlichen Pumpen. Aufgrund des mit der Ultrafiltration steigenden Xanthangehalts steigt auch die Viskosität der aufkonzentrierten Suspension, was zu entsprechend höheren erforderlichen Pumenleistungen führt. Die Ultrafiltration führt lediglich zu einer Aufkonzentrierung, nicht jedoch zur eigentlichen Abtrennung des Xanthans, da die xanthanhaltige Suspensionsflüssigkeit gut pumpbar bleiben muß, um die Funktion des Querstromfilterapparats aufrechterhalten zu können.

Das anschließend durch Zugabe von Isopropanol zur aufkonzentrierten Suspension ausgefällte Xanthan wird abfiltriert oder abzentrifugiert. Das zugesetzte Isopropanol wird nach diesem Filtrations- bzw. Zentrifugationsschritt durch Destillation rückgewonnen. Die Destillation ist hierbei relativ energieaufwendig, da die Verdampfungsenergie des gesamten eingesetzten Alkohols aufgewendet werden muß. Andererseits kann auf den Destillationsschritt bisher nicht verzichtet werden, um den Großteil des Isopropanols im Kreislauf halten und somit zum einen zu hohe Alkoholmengen im Abwasser, zum anderen zu hohen Verbrauch an Isopropanol vermeiden zu können. Dabei ist jedoch ein stets zu ersetzender Verlust an dem organischem Lösungsmittel Isopropanol bei dem herkömmlichen Verfahren unvermeidlich, da sich Alkohol auch in der beim Filtrieren bzw. Zentrifugieren abgetrennten Xanthanfraktion befindet.

Aus der deutschen Auslegeschrift 1205491 ist ein Trennverfahren für Proteine und somit Biopolymere bekannt, wobei eine Trennung aufgrund elektrophoretischer Effekte stattfindet. Die Trennwirkung beruht dabei auf unterschiedlichen Wanderungsgeschwindigkeiten verschiedener Proteine im elektrischen Feld. Ein kolloiddurchlässiges Filtermedium dient der hydrodynamischen Trennung. Die nicht durch das Filtermedium wandernde Proteinfraktion verbleibt in der Suspensionsflüssigkeit, so daß nur eine Trennung unterschiedlicher Proteinspezies voneinander, jedoch keine Abtrennung von Biopolymeren aus einer Suspensionsflüssigkeit erfolgt. Dabei kommt eine treibende Druckdifferenz von etwa 30 cm Wassersäule zum Einsatz. Auch aus JP-59171850 ist die Trennung suspendierter Proteine im elektrischen Feld bekannt, wobei nicht deren Abtrennung aus der Suspensionsflüssigkeit erfolgt. Der Trennungseffekt beruht auf unterschiedlichen elektrophoretischen Geschwindigkeiten der Proteinspezies. Eine Membran ist durchlässig für die Biopolymere und übernimmt nicht die Funktion eines Filtermediums, sondern dient lediglich als Strömungsbarriere zwischen Retentat- und Permeatstrom. Retentat- und der Permeatstrom fließen tangential zur Membran währen das elektrische Feld senkrecht zur Membran ausgerichtet ist und somit eine Kraft senkrecht zur Hauptbewegungsrichtung der Flüssigkeit auf die Proteinpartikeln ausübt.

Aus *Weber und Stahl, "Einfluß eines elektrischen Feldes auf die Kinetik der kuchenbildenden Preßfiltration" , Filtrieren & Separieren 14 (2000), S. 58-63* ist eine Laborapparatur bekannt, in welcher suspendierte mineralische Partikeln an einem Filtermedium abgeschieden werden, wobei ein angelegtes elektrisches Feld eine der Hauptbewegungsrichtung der Suspensionsflüssigkeit entgegengerichtete Kraft auf die Partikeln ausübt. Die für die Filtration treibende Druckdifferenz wird mittels eines Preßstempels aufgebracht.

### Darstellung der Erfindung

Aufgrund der Problematik der Alkoholrezirkulation und des Alkoholverlusts liegt der Erfindung die Aufgabe zugrunde, ein Verfahren zur Abtrennung von Biopolymeren, in erster Linie von Xanthan, aus einer Flüssigkeit zu schaffen, bei welchem auf eine Fällung mit Isopropanol verzichtet werden kann, und der Gesamtenergieverbrauch gegenüber herkömmlichen Verfahren deutlich vermindert ist .

Diese Aufgabe wird durch ein Verfahren zur Abtrennung von Biopolymeren, insbesondere von Polysacchariden, wie Xanthan, oder von Polyhydroxibuttersäure, aus einer Flüssigkeit gelöst, welches einen Filtrationsschritt aufweist, wobei im Filtrationsschritt die Hauptbewegungsrichtung der Flüssigkeit durch ein zwischen den beiden Seiten eines für die Filtration von Biopolymeren geeigneten Filtermediums mittels einer Pumpe erzeugte Druckdifferenz hervorgerufen wird, und in der Umgebung des Filtermediums ein elektrisches Feld so angelegt wird, daß es eine entgegen der Hauptbewegungsrichtung der Flüssigkeit auf die Biopolymere wirkende Kraft hervorruft. Das bedeutet, daß die Hauptbewegungsrichtung der Flüssigkeit im Verfahrensraum in Filtrationsrichtung durch das Filtermedium hindurch festlegt ist, und nicht quer dazu, wie bei einer Querstromfiltration. Entgegen dieser Hauptbewegungsrichtung erfahren die Biopolymere, welche aufgrund dissoziierter funktionaler Gruppen eine Ladung tragen, durch das angelegte elektrische Feld eine Kraft vom Filtermedium weg. Das elektrische Feld ist hierzu so orientiert, daß die Feldlinien senkrecht oder in einem steilen Winkel zur Oberfläche des Filtermediums verlaufen. Es kommt zu elektrokinetischen Effekten, d.h. Biopolymere werden durch Elektrophorese vom Filtermedium wegbewegt, wodurch die Konzentration von Biopolymeren in der Nähe des Filtermediums abnimmt und sich die Filtrationskinetik aufgrund der reduzierten Viskosität und der Vermeidung des Verlegens von Poren des Filtermediums erhöht. Bei der Flüssigkeit handelt es sich um ein überwiegend wässriges Medium, der Einsatz eines organischen Lösungsmittels kann entfallen. Die Druckdifferenz ist erfindungsgemäß größer als die Differenz zwischen dem atmosphärischen Druck der Umgebung und Vakuum, was zu einer erhöhten Filtrationsgeschwindigkeit führt.

Ein überraschender zusätzlicher Effekt besteht darin, daß das elektrische Feld zu einer Verstärkung der Koagulationsneigung der Biopolymere führt, was die Filtration durch Bildung von Agglomeraten weiter begünstigt.

Es hat sich überraschenderweise gezeigt, daß bei dem erfindungsgemäßen Verfahren in der Xanthanproduktion nicht nur auf den Einsatz eines organischen Lösungsmittel für die Fällung und den damit verbundenen Destillationsschritt verzichtet werden kann, sondern darüberhinaus auch das Vorschalten einer Ultrafiltration in einem Querstromfilter entfallen kann. Dies wirkt sich durch den Wegfall des Querstromfilterapparats günstig auf Betriebs- und Investitionskosten für eine entsprechende Anlage in der Xanthanproduktion aus.

Als Filtermedium wird vorzugsweise eine Membran eingesetzt, bei der es sich vorteilhafterweise um eine lonentauschermembran handeln kann. Alternativ kann ein Filtergewebe oder ein weitgehend starrer poröser Körper als Filtermedium eingesetzt werden.

In einer besonders vorteilhaften Weiterbildung der Erfindung wird der Filtrationsschritt in einem Apparat durchgeführt, bei welchem ein oder mehrere mit Filtermedium versehene hohle Stützelemente in einem Behälter angeordnet sind, der einen Zulauf aufweist, durch welchen die mit den Biopolymeren beladene Flüssigkeit dem Behälter zugeführt wird. Die Druckdifferenz wird zwischen der Außenseite und der Innenseite des Stützelements erzeugt, wodurch die Hauptbewegungsrichtung der Flüssigkeit von der Außenseite zur Innenseite durch das Filtermedium festgelegt wird. Die Flüssigkeit kann durch einen Filtratablauf von der Innenseite der Stützelemente ablaufen. Durch Verbindung mindestens zweier Elektroden mit einer elektrischen Spannungsquelle wird das elektrische Feld angelegt, wobei die Elektroden so angeordnet sind, daß in der Umgebung des Filtermediums die entgegen der Hauptbewegungsrichtung der Flüssigkeit auf die Biopolymere wirkende Kraft hervorgerufen wird.

In einer weiteren vorteilhaften Ausführungsform der Erfindung wird der Filtrationsschritt in einer mit mindestens zwei Elektroden ausgestatteten Filterpresse oder einem mit mindestens zwei Elektroden ausgestatteten Preßfilterautomat ausgeführt.

Soll mit kleineren Chargen gearbeitet werden, so kann der Filtrationsschritt vorzugsweise in einer mit mindestens zwei Elektroden ausgestatteten Drucknutsche ausgeführt werden.

In einer vorteilhaften Weiterbildung weist das Verfahren einen Schritt auf, in welchem die lonenkonzentration der Flüssigkeit gesenkt wird. Dieser Schritt wird vorzugsweise dem Filtrationsschritt vorgeschaltet und kann vorteilhafterweise mit Hilfe eines lonentauschers oder durch Dialyse oder Elektrodialyse ausgeführt werden.

Vorteilhafterweise erfolgen das Anlegen des elektrischen Feldes und das Erzeugen der Druckdifferenz gleichzeitig.

Das erfindungsgemäße Verfahren erweist sich auch dann als besonders vorteilhaft, wenn die Flüssigkeit neben den Biopolymeren zusätzlich partikuläre Bestandteile enthält. Hierbei werden die zusätzlichen partikulären Bestandteile vorteilhafterweise entweder während des Filtrationsschritts aus der Flüssigkeit mit abgetrennt, oder aber sie werden vor dem Filtrationsschritt aus der Flüssigkeit abgetrennt, vorzugsweise durch Zentrifugation. Werden die zusätzlichen partikulären Bestandteile während des Filtrationsschritts aus der Flüssigkeit mit abgetrennt, so wird durch das elektrische Feld auch ein positiver Effekt für die Abtrennung der partikulären Bestandteile bewirkt. Da Feststoffpartikeln in wässriger Umgebung in aller Regel eine Oberflächenladung tragen, machen sich auch hier elektrophoretische Effekt bemerkbar, wodurch der Aufbau eines Filterkuchens aus den partikulären Bestandteilen auf dem Filtermedium verzögert wird. Dies bedeutet eine günstige Beeinflussung der Filtrationskinetik.

Vorzugsweise ist das Filtermedium zwischen mindestens einem Elektrodenpaar, bestehend aus Anode und Kathode angeordnet, wobei die Anode vorteilhafterweise zumindest teilweise aus einer Nickelbasislegierung, aus Graphit oder aus Platin besteht. Eine der Elektroden kann eine metallisches Unterstützungsgewebe unter dem Filtermedium sein.

In einer vorteilhaften Weiterbildung der Erfindung besteht das Filtermedium zumindest teilweise aus einem elektrisch leitfähigen Material und wird selbst als Elektrode verwendet.

Die der Erfindung zugrunde liegende Aufgabe wird außerdem von einem Filterapparat zur Abtrennung einer dispersen Phase, insbesondere von Biopolymeren, wie etwa Xanthan, aus einer Flüssigkeit gelöst, wobei der Filterapparat ein oder mehrere mit einem Filtermedium versehene hohle Stützelemente aufweist, welche in einem Behälter angeordnet sind, dem die mit der dispersen Phase beladene Flüssigkeit durch einen Zulauf zugeführt werden kann. Zwischen der Außenseite und der Innenseite jedes Stützelements ist eine Druckdifferenz erzeugbar, welche eine Hauptbewegungsrichtung der Flüssigkeit von der Außenseite des Stützelements zur Innenseite durch das Filtermedium festlegt. Weiter weist der Filterapparat mindestens zwei Elektroden auf, welche so angeordnet sind, daß in der Umgebung des Filtermediums durch Verbindung der Elektroden mit einer elektrischen Spannungsquelle ein elektrisches Feld anlegbar ist, wodurch eine entgegen der Hauptbewegungsrichtung der Flüssigkeit auf die disperse Phase wirkende Kraft hervorrufbar ist. Durch einen Filtratablauf kann die Flüssigkeit ablaufen.

In einer vorteilhaften Ausführungsform ist jedes Stützelement prismenförmig oder zylindrisch und das Filtermedium bedeckt die Mantelfläche des Stützelements zumindest teilweise. Vorzugsweise ist dabei mindestens eine Elektrode ringförmig um jedes Stützelement angeordnet.

In einer weiteren vorteilhaften Ausführungsform ist jedes Stützelement platten-, scheiben- oder tellerförmig ausgeführt und weist zwei Stirnflächen auf, wobei das Filtermedium mindestens eine der beiden Stirnflächen zumindest teilweise bedeckt. Die Stützelemente können dabei vorteilhafterweise horizontal oder vertikal angeordnet sein.

In einer vorteilhaften Weiterbildung der Erfindung ist mindestens eine Elektrode in jedes Stützelement integriert. Vorzugsweise ist mindestens eine Elektrode ebenfalls platten-, scheiben- oder tellerförmig ausgeführt .

Vorzugsweise weist der Filterapparat mehrere parallelgeschaltete Stützelemente auf.

### Kurze Beschreibung der Zeichnungen

Im folgenden wird die Erfindung anhand von Ausführungsbeispielen näher erläutert, welche schematisch in den zugehörigen Zeichnungen dargestellt sind. Die Darstellungen sind hierbei zum Zwecke besserer Anschaulichkeit schematisiert und nicht maßstabsgetreu. Es zeigen:
- Fig.1:: das Grundprinzip des Filtrationschritts des erfindungsgemäßen Verfahrens,
- Fig.2:: die schematische, unmaßstäbliche Schnittdarstellung eines erfindungsgemäßen Filterapparats mit tellerförmigen Stützelementen, und
- Fig.3:: die schematische, unmaßstäbliche Schnittdarstellung eines erfindungsgemäßen Filterapparats mit einem zylindrischen Stützelement.

### Bester Weg zur Ausführung der Erfindung

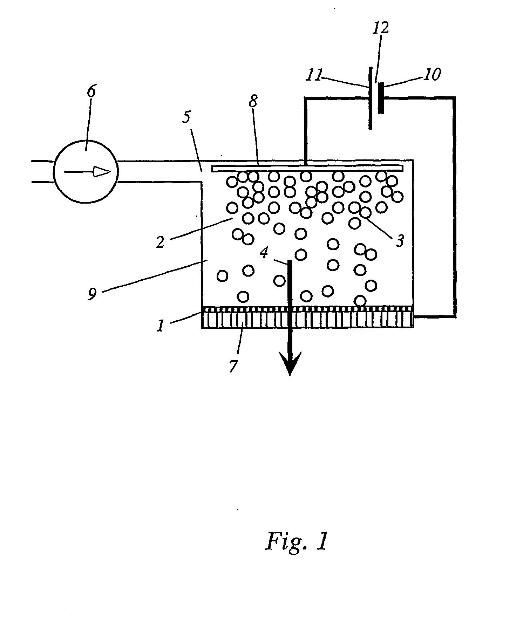

In Fig.1 ist das Grundprinzip des erfindungsgemäßen Verfahrens schematisch dargestellt. Zwischen den zwei Seiten eines Filtermediums 1, beispielsweise einer zur Filtration von Biopolymeren geeigneten Membran, wird eine Druckdifferenz erzeugt, welche dazu führt, daß die durch den Zulauf 5 zugeführte wässrige Flüssigkeit 2, welche mit Makromolekülen bzw. Kolloiden aus dem abzutrennenden Biopolymer 3, beispielsweise Xanthan, beladen ist, durch das Filtermedium 1 hindurchtritt, wobei das Biopolymer von dem Filtermedium 1 zurückgehalten wird, und somit eine Filtration stattfindet. Die Hauptbewegungsrichtung 4 der Flüssigkeit 2 wird hierbei, im Gegensatz zu einer Querstromfiltration, durch die transmembranen Druckdifferenz festgelegt. Die Druckdifferenz kann beispielsweise über den Zulauf 5 hydraulisch mittels einer Pumpe 6 erzeugt werden. Unter der Filtermembran 1 ist ein als Kathode 7 dienendes metallisches Unterstützungsgewebe angeordnet. Auf der gegenüberliegenden Seite des Verfahrensraums 9 ist eine als Anode 8 dienende Platte, beispielsweise aus Hastelloy, angeordnet. Die Kathode 7 wird mit dem Minuspol 10, die Anode 8 mit dem Pluspol 11 einer Gleichspannungsquelle 12 verbunden, wodurch zwischen den Elektroden 7, 8 ein elektrisches Feld aufgebaut wird. Da die Biopolymerbestandteile 3 aufgrund dissoziierter OH-Gruppen eine negative Oberflächenladung tragen, wirkt auf sie im elektrischen Feld eine Kraft in Richtung der Anode 8 und somit entgegen der Hauptbewegungsrichtung der Flüssigkeit 2. Oberhalb einer kritischen Feldstärke, welche erforderlich ist, damit die Feldkraft die Widerstandskraft der durch das Filtermedium 1 abströmenden Flüssigkeit 2 übersteigt, werden die Biopolymerbestandteile 3 elektrophoretisch in Richtung der Anode 8 bewegt, wodurch sich die Biopolymerkonzentration in der Umgebung des Filtermediums 1 vermindert und die Filtrationsgeschwindigkeit erhöht. Zudem wirkt auf die aufgrund der Erhaltung der Elektroneutralität des Gesamtsystems positiv geladenen Flüssigkeit 2 ebenfalls eine elektrische Kraft, welche Elektroosmose hervorruft, d.h. die Bewegung der Flüssigkeit 2 in Richtung der Kathode 7 unterstützt, indem sich der angelegten Druckdifferenz ein elektroosmotischer Druck überlagert. Nach Abschluß des Trennvorgangs kann die im Verfahrensraum 9 verbliebene Biopolymermasse durch Anlegen von Gasdifferenzdruck entfeuchtet und anschließend ausgetragen werden.

Um den elektrischen Stromfluß gering zu halten, wird die Leitfähigkeit der Flüssigkeit 2 vor der Durchführung der geschilderten Filtration mittels eines nicht dargestellten lonentauschers vermindert.

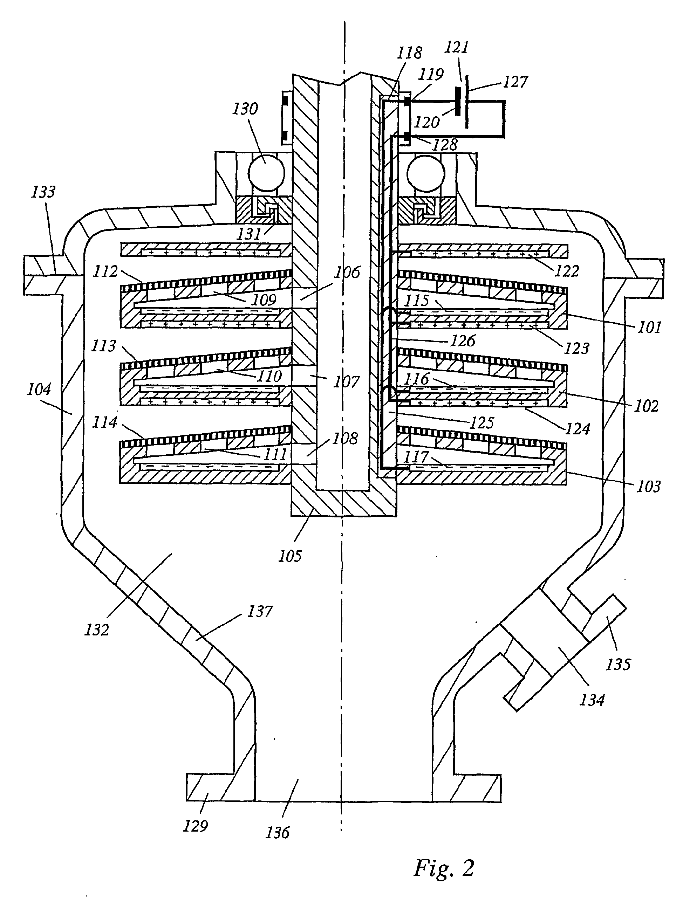

In Fig.2 ist ein erfindungsgemäßer Filterapparat als schematische, unmaßstäbliche Schnittzeichnung dargestellt. Die hohlen, tellerförmigen Stützelemente 101, 102, 103 sind aus elektrisch nichtleitendem Kunststoff ausgeführt und im Inneren des Behälter 104 angeordnet. Dabei sind die Stützelemente 101, 102, 103 auf der Hohlwelle 105 befestigt. Die Innenseite jedes Stützelements 101, 102, 103 ist über Filtratablaufbohrungen 106, 107, 108 mit der Innenseite der Hohlwelle 105 verbunden. Jedes Stützelement 101, 102, 103 weist an seiner mit Durchtrittsöffnungen 109, 110, 111 versehenen Oberseite ein Filtermedium 112, 113, 114 auf, welches beispielsweise eine für die Filtration von Biopolymeren geeignete Membran sein kann. Durch filtratseitiges Anlegen von Vakkum, d.h. durch Anlegen von Vakuum in einem mit dem Inneren der Hohlwelle verbundenen, nicht dargestellten Filtratsammelraum ist eine Druckdifferenz zwischen der Innen- und der Außenseite jedes Stützelements 101, 102, 103 erzeugbar. In die Stützelemente 101, 102, 103 sind jeweils unterhalb des Filtermediums Elektroden 115, 116, 117 angeordnet, welche über eine in einem Isolatorkörper 125 verlegte Leitung 118 und einen Schleifringkontakt 119 mit dem Minuspol 120 einer Gleichspannungsquelle 121 verbunden und somit als Kathoden 115, 116, 117 geschaltet sind. Gegenüber jeder Kathode ist auf der jeweils anderen Seite des jeweils zugehörigen Filtermediums 112, 113, 114 jeweils eine als Anode 122, 123, 124 geschaltete Elektrode 122, 123, 124 angeordnet, welche über eine weitere in dem Isolatorkörper 125 verlegte Leitung 126 und einen Schleifringkontakt 128 mit dem Pluspol 127 der Gleichspannungsquelle 121 verbunden ist, so daß zwischen den Elektrodenpaaren 115/122, 116/123 und 117/124 jeweils ein elektrisches Feld anlegbar ist. Die Hohlwelle 105 ist fliegend gelagert, wobei nur ein Lager 130 dargestellt ist, weiches über eine Labyrinthdichtung 131 gegenüber dem Verfahrensraum 132 im Inneren des Behälters 104 abgedichtet ist. Der Behälter 104 kann an der Flanschverbindung 133 geöffnet werden. Zudem weist der Behälter 104 einen Zulauf 134 mit Zulaufflansch 135 und einen verschließbaren Austrag 136 mit Austragsflansch 129 auf.

Im Betrieb wird dem Behälter 104 durch den Zulauf 134 eine mit einer dispersen Phase, beispielsweise Xanthan, beladene Flüssigkeit dem Verfahrensraum 132 zugeführt, welche aufgrund der angelegten Druckdifferenz durch das Filtermedium 112, 113, 114 ins Innere der Stützelemente 101, 102, 103 abfiltriert und über die Filtratablaufbohrungen 106, 107, 108 und das Innere der Hohlwelle 105 in den nicht dargestellten Filtratsammelraum abgeführt wird. Der Austrag 136 ist geschlossen. Auf die disperse Phase wirkt dabei eine der Hauptbewegungsrichtung der Flüssigkeit entgegengerichtete Kraft, welche die Konzentration der dispersen Phase in der Nähe des Filtermediums 112, 113, 114 herabsetzt und somit die Filtrationsgeschwindigkeit erhöht. Die Disperse Phase wird an den Anoden 122, 123, 124 und mit der letzten aus dem Verfahrensraum 132 ablaufenden Flüssigkeit an dem Filtermedium 112, 113, 114 abgeschieden. Nach der erfolgten Filtration wird die abgeschiedene disperse Phase ausgetragen, indem der Austrag 136 geöffnet und die Hohlwelle 105 samt den Stützelementen 101, 102, 103 in Drehschwingungen versetzt wird. Die abgeschieden disperse Phase wird so zunächst von den Stützelementen 101, 102, 103 abgeschleudert und rutscht dann die schräge Wand 137 im unteren Teil des Behälters 104 entlang zum Austrag 136.

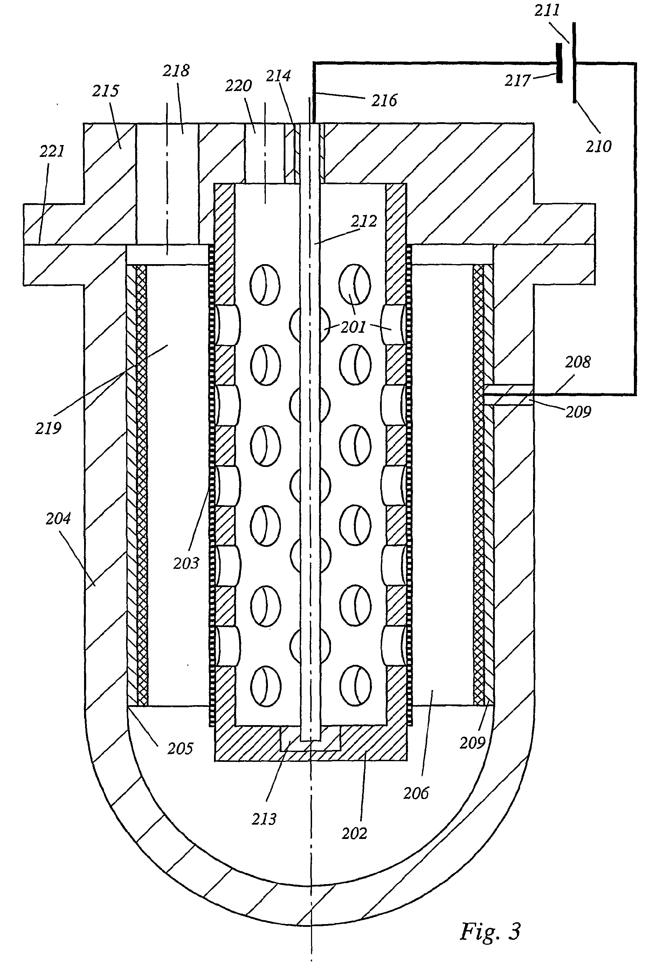

In Fig.3 ist ein weiteres Ausführungsbeispiel eines erfindungsgemäßen Filterapparats als schematische, unmaßstäbliche Schnittzeichnung dargestellt. Der Apparat weist ein mit Durchtrittsöffnungen 201 versehenes hohles zylindrisches Stützelement 202 auf, welches mit einem Filtermedium 203 bespannt ist, bei welchem es sich um eine für die Filtration von Biopolymeren geeignete Membran handeln kann. Das Stützelement ist im Inneren eines Druckbehälters 204 angeordnet. Entlang der Behälterwand 205 ist um das Stützelement herum eine zylindrische Elektrode 206 angeordnet, welche mit der Isolatorschicht 207 gegenüber der Behälterwand 205 elektrisch abisoliert ist. Die Elektrode 206 ist über eine Leitung 208, weiche durch den Isolatorkörper 209 aus dem Druckbehälter 204 herausgeführt ist, mit dem Pluspol 210 der Gleichspannungsquelle 211 verbunden und somit als Anode 206 geschaltet. Im Inneren des Stützelements 202 ist eine stabförmige Elektrode 212 angeordnet, welche von zwei im Stützelement 201 bzw. Behälterdeckel 215 eigelassenen Isolatorstücken 213 und 214 gehalten wird und über eine Leitung 216 mit dem Minuspol 217 der Gleichspannungsquelle 211 verbunden und somit als Kathode 212 geschaltet ist. Durch den Behälterdeckel 215, welcher über eine lösbare Flanschverbindung 221 vom Restlichen Druckbehälter 204 abgenommen werden kann, führt ein Zulauf 218 in den Verfahrensraum 219 und ein Filtratablauf 220 vom Inneren des Stützelements 202 in eine nicht dargestellte Filtratablaufleitung.

Im Betrieb wird die mit der dispersen Phase, beispielsweise Xanthan, beladene Flüssigkeit durch den Zulauf 218 in den Verfahrensraum 219 im Inneren des Druckbehälters 204 gepumpt. Die nicht dargestellte Pumpe sorgt auch für die Druckdifferenz zwischen der Außenseite und der Innenseite des Stützelements 202, welche als treibendes Potential die Hauptbewegungsrichtung der Flüssigkeit durch das Filtermedium 203 hindurch bewirkt. Die durch die Eintrittsöffnungen 201 des Stützelements 202 ins Innere des Stützelements gelangte Flüssigkeit kann als Filtrat durch den Filtratablauf 220 ablaufen. Das zwischen den Elektroden 206 und 212 aufgebaute elektrische Feld bewirkt eine der Hauptbewegungsrichtung der Flüssigkeit entgegengerichtete Kraft auf die disperse Phase, so daß die Konzentration der dispersen Phase in der Nähe des Filtermediums 203 abgesenkt wird, was die die Filtrationsgeschwindigkeit erhöht und ein Verstopfen der Poren des Filtermediums 203 verhindert.

## Patentansprüche

1. Verfahren zur Abtrennung von Biopolymeren (3) aus einer Flüssigkeit (2), welches einen Filtrationsschritt aufweist,
wobei in dem Filtrationsschritt die Hauptbewegungsrichtung (4) der Flüssigkeit (2) durch eine zwischen den beiden Seiten eines für die Filtration von Biopolymeren geeigneten Filtermediums (1, 112, 113, 114, 203) mittels einer Pumpe erzeugte Druckdifferenz hervorgerufen wird, welche größer ist als die Differenz zwischen dem atmosphärischen Druck der Umgebung und Vakuum,
und in der Umgebung des Filtermediums (1, 112, 113, 114, 203) ein elektrisches Feld so angelegt wird, daß es eine entgegen der Hauptbewegungsrichtung (4) der Flüssigkeit (2) auf die Biopolymere (3) wirkende Kraft hervorruft.

2. Verfahren nach Anspruch 1, **dadurch gekennzeichnet daß** die Biopolymere (3) mindestens zu einem Anteil aus Xanthan und/oder anderen Polysacchariden bestehen.

3. Verfahren nach Anspruch 1, **dadurch gekennzeichnet daß** die Biopolymere (3) mindestens zu einem Anteil aus Polyhydroxibuttersäure bestehen.

4. Verfahren nach A einem der vorangehenden Ansprüche, **dadurch gekennzeichnet, daß** als Filtermedium eine lonentauschermembran eingesetzt wird.

5. Verfahren nach einem der vorangehenden Ansprüche, **dadurch gekennzeichnet, daß** der Filtrationsschritt in einem Apparat ausgeführt wird, welcher folgendes aufweist:
(a) einen Behälter (104, 204), der einen Zulauf (134, 218) aufweist, durch welchen die mit den Biopolymeren (3) beladene Flüssigkeit (2) dem Behälter (104, 204) zuführbar ist,
(b) mindestens ein mit einem Filtermedium (1, 112, 113, 114, 203) versehenes Stützelement (101, 102, 103, 202), welches in dem Behälter (104, 204) angeordnet ist und eine Außenseite und eine Innenseite sowie einen Filtratablauf (106, 107, 108, 220) aufweist, durch welchen Flüssigkeit (2) ablaufen kann, wobei zwischen der Außenseite und der Innenseite des Stützelements (101, 102, 103, 202) die Druckdifferenz erzeugbar ist, welche die Hauptbewegungsrichtung (4) der Flüssigkeit (2) von der Außenseite zur Innenseite durch das Filtermedium (1, 112, 113, 114, 203) festlegt,
(c) mindestens zwei Elektroden (7, 8, 115, 116, 117, 122, 123, 124, 206, 212), welche so angeordnet sind, daß in der Umgebung des Filtermediums (1, 112, 113, 114, 203) durch Verbindung der Elektroden (7, 8, 115, 116, 117, 122, 123, 124, 206, 212) mit einer elektrischen Spannungsquelle (12, 121, 211) ein elektrisches Feld anlegbar ist, wodurch die entgegen der Hauptbewegungsrichtung (4) der Flüssigkeit (2) auf die Biopolymere (3) wirkende Kraft hervorrufbar ist.

6. Verfahren nach einem der Ansprüche 1-4, **dadurch gekennzeichnet, daß** der Filtrationsschritt in einer mit mindestens zwei Elektroden (7, 8) ausgestatteten Filterpresse oder einem mit mindestens zwei Elektroden (7, 8) ausgestatteten Preßfilterautomat oder einer mit mindestens zwei Elektroden (7, 8) ausgestatteten Drucknutsche ausgeführt ausgeführt wird.

7. Verfahren nach einem der vorangehenden Ansprüche, **dadurch gekennzeichnet, daß** das Verfahren einen Schritt aufweist, in welchem die lonenkonzentration der Flüssigkeit (2) gesenkt wird, und welcher dem Filtrationsschritt vorgeschaltet ist oder mit diesem gleichzeitig stattfindet.

8. Verfahren nach Anspruch 7, **dadurch gekennzeichnet, daß** der Schritt, in welchem die Ionenkonzentration der Flüssigkeit (2) gesenkt wird, im selben Verfahrensraum (9, 132, 219) wie der Filtrationsschritt ausgeführt wird.

9. Verfahren nach Anspruch 7, **dadurch gekennzeichnet, daß** die lonenkonzentration der Flüssigkeit (2) mit Hilfe eines lonentauschers oder durch Dialyse oder Elektrodialyse gesenkt wird.

10. Verfahren nach einem der vorangehenden Ansprüche, **dadurch gekennzeichnet, daß** das Anlegen des elektrischen Feldes und das Erzeugen der Druckdifferenz nacheinander erfolgen.

11. Verfahren nach einem der Ansprüche 1 bis 9, **dadurch gekennzeichnet, daß** das Anlegen des elektrischen Feldes und das Erzeugen der Druckdifferenz gleichzeitig erfolgen.

12. Verfahren nach einem der vorangehenden Ansprüche, **dadurch gekennzeichnet, daß** die Flüssigkeit (2) neben den Biopolymeren (3) zusätzlich partikuläre Bestandteile enthält, welche vor oder während des Filtrationsschritts aus der Flüssigkeit (2) abgetrennt werden.

13. Verfahren nach Anspruch 12, **dadurch gekennzeichnet, daß** die Abtrennung der zusätzlichen partikulären Bestandteile durch Zentrifugation erfolgt.

14. Verfahren nach einem der vorangehenden Ansprüche, **dadurch gekennzeichnet, daß** das Filtermedium (1, 112, 113, 114, 203) zwischen mindestens einem Elektrodenpaar (7/8, 115/122, 116/123, 117/124, 206/212), bestehend aus Anode (8, 122, 123, 124, 206) und Kathode (7, 115, 116, 117, 212) angeordnet ist.

15. Verfahren nach Anspruch 14, **dadurch gekennzeichnet, daß** die eingesetzte Anode (8, 122, 123, 124, 206) zumindest teilweise aus einer Nickelbasislegierung oder Graphit oder Platin besteht.

16. Verfahren nach einem der Ansprüche 1 bis 13, **dadurch gekennzeichnet, daß** das Filtermedium (1, 112, 113, 114, 203) zumindest teilweise aus einem elektrisch leitfähigen Material besteht und als Elektrode (7) verwendet wird.

17. Verfahren nach einem der vorangehenden Ansprüche, **dadurch gekennzeichnet, daß** die Flüssigkeit (2) frei von eine Fällung der Biopolymere (3) bewirkenden organischen Lösungsmitteln gehalten wird.

18. Verfahren zur Herstellung von Xanthan, welches mindestens einen Fermentationsschritt sowie mindestens einen Schritt zur Abtrennung der erzeugten Xanthan-Biopolymere aus der Fermenterbrühe aufweist, wobei die Abtrennung gemäß einem der Ansprüche 1-2 oder 4-17 erfolgt.

19. Filterapparat zur Abtrennung einer dispersen Phase, insbesondere von Biopolymeren (3), aus einer Flüssigkeit (2), welcher folgendes aufweist:
(a) einen Behälter (104, 204), der einen Zulauf (134, 218) aufweist, durch welchen die mit der dispersen Phase beladene Flüssigkeit (2) dem Behälter (104, 204) zuführbar ist,
(b) mindestens ein mit einem Filtermedium (1, 112, 113, 114, 203) versehenes hohles Stützelement (101, 102, 103, 202), welches in dem Behälter (104, 204) angeordnet ist und eine Außenseite und eine Innenseite sowie einen Filtratablauf (106, 107, 108, 220) aufweist, durch welchen Flüssigkeit (2) aus dem Inneren des Stützelements ablaufen kann, wobei zwischen der Außenseite und der Innenseite des Stützelements (101, 102, 103, 202) eine Druckdifferenz erzeugbar ist, welche eine Hauptbewegungsrichtung (4) der Flüssigkeit (2) von der Außenseite zur Innenseite durch das Filtermedium (1, 112, 113, 114, 203) festlegt,
(c) mindestens zwei Elektroden (7, 8, 115, 116, 117, 122, 123, 124, 206, 212), welche so angeordnet sind, daß in der Umgebung des Filtermediums (1, 112, 113, 114, 203) durch Verbindung der Elektroden (7, 8, 115, 116, 117, 122, 123, 124, 206, 212) mit einer elektrischen Spannungsquelle (12, 121, 211) ein elektrisches Feld anlegbar ist, wodurch eine entgegen der Hauptbewegungsrichtung (4) der Flüssigkeit (2) auf die disperse Phase wirkende Kraft hervorrufbar ist.

20. Filterapparat nach Anspruch 19, **dadurch gekennzeichnet, daß** das Stützelement (202) prismenförmig oder zylinderförmig ist und das Filtermedium (1, 203) die Mantelfläche des Stützelements (202) zumindest teilweise bedeckt.

21. Filterapparat nach Anspruch 20, **dadurch gekennzeichnet, daß** mindestens eine Elektrode (206) ringförmig um das Stützelement (202) angeordnet ist.

22. Filterapparat nach Anspruch 21, **dadurch gekennzeichnet, daß** das Stützelement (101, 102, 103) platten-, scheiben- oder tellerförmig ausgeführt ist und zwei Stirnflächen aufweist, und das Filtermedium (1, 112, 113, 114) mindestens eine der beiden Stirnflächen zumindest teilweise bedeckt.

23. Filterapparat nach Anspruch 22, **dadurch gekennzeichnet, daß** mindestens eine Elektrode (122) ebenfalls platten-, scheiben- oder tellerförmig ausgeführt ist.

24. Filterapparat nach einem der Ansprüche 21-22, **dadurch gekennzeichnet, daß** das Stützelement (101, 102, 103) horizontal oder vertikal angeordnet ist.

25. Filterapparat nach einem der Ansprüche 19 bis 24, **dadurch gekennzeichnet, daß** mindestens eine Elektrode in das Stützelement (101, 102, 103, 202) integriert ist.

26. Filterapparat nach einem der Ansprüche 19 bis 25, **dadurch gekennzeichnet, daß** der Filterapparat mehrere parallelgeschaltete Stützelemente (101, 102, 103) aufweist.

27. Verwendung einer mit mindestens zwei Elektroden (7, 8) ausgestatteten Filterpresse zur Durchführung eines Verfahrens gemäß einem der Ansprüche 6-17.

28. Verwendung eines mit mindestens zwei Elektroden (7, 8) ausgestatteten Preßfilterautomats zur Durchführung eines Verfahrens gemäß einem der Ansprüche 6-17.

29. Verwendung einer mit mindestens zwei Elektroden (7, 8) ausgestatteten Drucknutsche zur Durchführung eines Verfahrens gemäß einem der Ansprüche 6-17.

## Claims

1. Process for the separation of biopolymers (3) from a liquid (2), which has a filtration step,
wherein in the filtration step the main direction of movement (4) of the liquid (2) is brought about by a pressure difference generated by means of a pump between the two sides of a filter medium (1, 112, 113, 114, 203) suitable for the filtration of biopolymers, said pressure difference being greater than the difference between the atmospheric pressure of the surroundings and a vacuum,
and in the region of the filter medium (1, 112, 113, 114, 203), an electric field is applied so that it brings about a force acting against the main direction of movement (4) of the liquid (2) on the biopolymers (3).

2. Process according to Claim 1, **characterised in that** the biopolymers (3) partly consist of xanthan gum and/or other polysaccharides.

3. Process according to Claim 1, **characterised in that** the biopolymers (3) partly consist of polyhydroxy butyric acid.

4. Process according to one of the preceding claims, **characterised in that** an ion exchange membrane is used as filter medium.

5. Process according to one of the preceding claims, **characterised in that** the filtration step is performed in an apparatus, which has the following:
(a) a container (104, 204), which has an inlet (134, 218), through which the liquid (2) laden with the biopolymers (3) can be fed to the container (104, 204),
(b) at least one support element (101, 102, 103, 202), which is provided with a filter medium (1, 112, 113, 114, 203), is arranged in the container (104, 204) and has an outside and an inside as well as a filtrate outlet (106, 107, 108, 220), through which liquid (2) can discharge, wherein between the outside and the inside of the support element (101, 102, 103, 202) the pressure difference can be generated, which defines the main direction of movement (4) of the liquid (2) from the outside to the inside through the filter medium (1, 112, 113, 114,203),
(c) at least two electrodes (7, 8, 115, 116, 117, 122, 123, 124, 206, 212), which are arranged so that in the region of the filter medium (1, 112, 113, 114, 203) through connection of the electrodes (7, 8, 115, 116, 117, 122, 123, 124, 206, 212) to an electrical voltage source (12, 121, 211) an electric field can be applied, through which the force acting against the main direction of movement (4) of the liquid (2) on the biopolymers (3) can be brought about.

6. Process according to one of Claims 1-4, **characterised in that** the filtration step is performed in a filter press equipped with at least two electrodes (7, 8) or an automatic filter press equipped with at least two electrodes (7, 8) or a Nutsch filter equipped with at least two electrodes (7, 8).

7. Process according to one of the preceding claims, **characterised in that** the process has a step, in which the ion concentration of the liquid (2) is reduced, and which is arranged before the filtration step or takes place at the same time as this.

8. Process according to Claim 7, **characterised in that** the step, in which the ion concentration of the liquid (2) is reduced, is conducted in the same process chamber (9, 132, 219) as the filtration step.

9. Process according to Claim 7, **characterised in that** the ion concentration of the liquid (2) is reduced by means of an ion exchanger or by dialysis or electrodialysis.

10. Process according to one of the preceding claims, **characterised in that** the application of the electric field and the generation of the pressure difference occur one after the other.

11. Process according to one of Claims 1 to 9, **characterised in that** the application of the electric field and the generation of the pressure difference occur simultaneously.

12. Process according to one of the preceding claims, **characterised in that** besides the biopolymers (3) the liquid (2) additionally contains particulate constituents, which are separated from the liquid (2) before or during the filtration step.

13. Process according to Claim 12, **characterised in that** the separation of the additional particulate constituents is achieved by centrifuging.

14. Process according to one of the preceding claims, **characterised in that** the filtration medium (1, 112, 113, 114, 203) is arranged between at least one electrode pair (7/8, 115/122, 116/123, 117/124, 206/212) comprising an anode (8, 122, 123, 124, 206) and a cathode (7, 115, 116, 117, 212).

15. Process according to Claim 14, **characterised in that** the anode (8, 122, 123, 124, 206) used is composed at least partially of a nickel-based alloy or graphite or platinum.

16. Process according to one of Claims 1 to 13, **characterised in that** the filter medium (1, 112, 113, 114, 203) is composed at least partially of an electrically conductive material and is used as an electrode (7).

17. Process according to one of the preceding claims, **characterised in that** the liquid (2) is kept free of organic solvents, which cause precipitation of the biopolymers (3).

18. Process for the production of xanthan gum, which has at least one fermentation step as well as at least one step for the separation of the xanthan gum biopolymers produced from the fermenter broth, wherein the separation is performed in accordance with one of Claims 1-2 or 4-17.

19. Filter apparatus for the separation of a dispersed phase, in particular of biopolymers (3), from a liquid (2), which has the following:
(a) a container (104, 204), which has an inlet (134, 218), through which the liquid (2) laden with the dispersed phase can be fed to the container (104, 204),
(b) at least one hollow support element (101, 102, 103, 202), which is provided with a filter medium (1, 112, 113, 114, 203), is arranged in the container (104, 204) and has an outside and an inside as well as a filtrate outlet (106, 107, 108, 220), through which liquid (2) can discharge from the interior of the support element, wherein between the outside and the inside of the support element (101, 102, 103, 202) a pressure difference can be generated, which defines a main direction of movement (4) of the liquid (2) from the outside to the inside through the filter medium (1, 112, 113, 114, 203),
(c) at least two electrodes (7, 8, 115, 116, 117, 122, 123, 124, 206, 212), which are arranged so that in the region of the filter medium (1, 112, 113, 114, 203) through connection of the electrodes (7, 8, 115, 116, 117, 122, 123, 124, 206, 212) to an electrical voltage source (12, 121, 211) an electric field can be applied, through which a force acting against the main direction of movement (4) of the liquid (2) on the disperse phase can be brought about.

20. Filter apparatus according to Claim 19, **characterised in that** the support element (202) is prism-shaped or cylindrical and the filter medium (1, 203) at least partially covers the lateral surface of the support element (202).

21. Filter apparatus according to Claim 20, **characterised in that** at least one electrode (206) is arranged in a ring shape around the support element (202).

22. Filter apparatus according to Claim 21, **characterised in that** the support element (101, 102, 103) is configured in the form of a panel, disc or plate and has two faces, and the filter medium (1, 112, 113, 114) at least partially covers at least one of the two faces.

23. Filter apparatus according to Claim 22, **characterised in that** at least one electrode (122) is also configured in the form of a panel, disc or plate.

24. Filter apparatus according to one of Claims 21-22, **characterised in that** the support element (101, 102, 103) is arranged horizontally or vertically.

25. Filter apparatus according to one of Claims 19 to 24, **characterised in that** at least one electrode is integrated into the support element (101, 102, 103, 202).

26. Filter apparatus according to one of Claims 19 to 25, **characterised in that** the filter apparatus has several support elements (101, 102, 103) connected in parallel.

27. Use of a filter press equipped with at least two electrodes (7, 8) for performing a process according to one of Claims 6-17.

28. Use of an automatic filter press equipped with at least two electrodes (7, 8) for performing a process according to one of Claims 6-17.

29. Use of a pressurized Nutsch filter equipped with at least two electrodes (7, 8) for performing a process according to one of Claims 6-17.

## Revendications

1. Procédé de séparation de biopolymères (3) à partir d'un liquide (2), lequel procédé présente une étape de filtration,
dans lequel, dans l'étape de filtration, le sens principal de déplacement (4) du liquide (2) est déterminé par une différence de pression produite au moyen d'une pompe entre les deux côtés d'un milieu filtrant (1, 112, 113, 114, 203) approprié pour la filtration de biopolymères, différence de pression qui est supérieure à la différence entre la pression atmosphérique de l'environnement et vide,
et, dans l'environnement du milieu filtrant (1, 112, 113, 114, 203), un champ électrique est établi de telle sorte qu'il provoque une force agissant sur les biopolymères (3) à l'encontre du sens principal de déplacement (4) du fluide (2).

2. Procédé selon la revendication 1, **caractérisé par le fait que** les biopolymères (3) se composent au moins en partie de xanthane et/ou d'autres polysaccharides.

3. Procédé selon la revendication 1, **caractérisé par le fait que** les biopolymères (3) se composent au moins en partie d'acide polyhydroxybutyrique.

4. Procédé selon l'une des revendications précédentes, **caractérisé par le fait que**, comme milieu filtrant, est utilisée une membrane échangeuse d'ions.

5. Procédé selon l'une des revendications précédentes, **caractérisé par le fait que** l'étape de filtration est accomplie dans un appareil, qui présente ce qui suit :
(a) un récipient (104, 204) qui présente une entrée (134, 218) par laquelle le fluide (2) chargé par les biopolymères (3) est apte à être amené au récipient (104, 204) ;
(b) au moins un élément de support (101, 102, 103, 202) qui est muni d'un milieu filtrant (1, 112, 113, 114, 203), qui est disposé dans le récipient (104, 204) et qui présente un côté externe et un côté interne ainsi qu'une sortie de filtrat (106, 107, 108, 220) par laquelle du liquide (2) peut s'écouler, la différence de pression étant apte à être produite entre le côté externe et le côté interne de l'élément de support (101, 102, 103, 202), laquelle différence de pression détermine le sens principal de déplacement (4) du fluide (2) du côté externe vers le côté interne à travers le milieu filtrant (1, 112, 113, 114, 203) ;
(c) au moins deux électrodes (7, 8, 115, 116, 117, 122, 123, 124, 206, 212) lesquelles sont disposées de telle sorte que, dans l'environnement du milieu filtrant (1, 112, 113, 114, 203) par connexion des électrodes (7, 8, 115, 116, 117, 122, 123, 124, 206, 212) avec une source de tension électrique (12, 121, 211) un champ électrique est apte à être établi, ce par quoi la force agissant sur les biopolymères (3) à l'encontre du sens principal de déplacement (4) du fluide (2) est apte à être provoquée.

6. Procédé selon l'une des revendications 1 à 4, **caractérisé par le fait que** l'étape de filtration est réalisée dans un filtre-presse équipé d'au moins deux électrodes (7, 8) ou un automate de filtre-presse équipé d'au moins deux électrodes (7, 8) ou d'un entonnoir-filtre sous pression équipé d'au moins deux électrodes (7, 8).

7. Procédé selon l'une des revendications précédentes, **caractérisé par le fait que** le procédé présente une étape dans laquelle la concentration des ions du liquide est abaissée et qui est placée en amont de l'étape de filtration ou a lieu simultanément à celle-ci.

8. Procédé selon la revendication 7, **caractérisé par le fait que** l'étape dans laquelle la concentration des ions du liquide (2) est abaissée, est effectuée dans le même espace de procédé (9, 132, 219) que l'étape de filtration.

9. Procédé selon la revendication 7, **caractérisé par le fait que** la concentration des ions du liquide (2) est abaissée à l'aide d'un échangeur d'ions ou par dialyse ou électrodialyse.

10. Procédé selon l'une des revendications précédentes, **caractérisé par le fait que** l'établissement du champ électrique et la production de la différence de pression ont lieu l'une après l'autre.

11. Procédé selon l'une des revendications 1 à 9, **caractérisé par le fait que** l'établissement du champ électrique et la production de la différence de pression ont lieu simultanément.

12. Procédé selon l'une des revendications précédentes, **caractérisé par le fait que** le liquide (2) contient, en dehors des biopolymères (3) additionnellement des constituants particulaires, lesquels sont séparés du liquide (2) avant ou pendant l'étape de filtration.

13. Procédé selon la revendication 12, **caractérisé par le fait que** la séparation des constituants particulaires additionnels a lieu par centrifugation.

14. Procédé selon l'une des revendications précédentes, **caractérisé par le fait que** le milieu filtrant (1, 112, 113, 114, 203) est disposé entre au moins une paire d'électrodes (7/8, 115/122, 116/123, 117/124, 206/212), se composant d'une anode (8, 112, 123, 124, 206) et d'une cathode (7, 115, 116, 117, 212).

15. Procédé selon la revendication 14, **caractérisé par le fait que** l'anode utilisée (8, 112, 123, 124, 206) se compose au moins en partie d'un alliage à base de nickel ou de graphite ou de platine.

16. Procédé selon l'une des revendications 1 à 13, **caractérisé par le fait que** le milieu filtrant (1, 112, 113, 114, 203) se compose au moins en partie d'un matériau conducteur de l'électricité et est utilisé comme électrode (7).

17. Procédé selon l'une des revendications précédentes, **caractérisé par le fait que** le liquide (2) est maintenu exempt de solvants organiques provoquant une précipitation des biopolymères (3).

18. Procédé de fabrication de xanthane, lequel présente au moins une étape de fermentation ainsi qu'au moins une étape de séparation des biopolymères de xanthane obtenus à partir du bouillon du fermenteur, la séparation ayant lieu conformément à l'une des revendications 1-2 ou 4-17.

19. Appareil de filtration pour la séparation d'une phase dispersée, en particulier de biopolymères (3), à partir d'un liquide (2), lequel appareil présente ce qui suit :
(a) un récipient (104, 204) qui présente une entrée (134, 218) par laquelle le liquide (2) chargé de la phase dispersée est apte à être amené au récipient (104, 204) ;
(b) au moins un élément de support creux (101, 102, 103, 202) qui est muni d'un milieu filtrant (1, 112, 113, 114, 203), qui est disposé dans le récipient (104,204) et qui présente un côté externe et un côté interne ainsi qu'une sortie de filtrat (106, 107, 108, 220) par laquelle du liquide (2) peut s'écouler à partir de l'intérieur de l'élément de support, une différence de pression étant apte à être produite entre le côté externe et le côté interne de l'élément de support (101, 102, 103, 202), laquelle différence de pression détermine un sens principal de déplacement (4) du liquide (2) du côté externe vers le côté interne à travers le milieu filtrant (1, 112, 113, 114, 203) ;
(c) au moins deux électrodes (7, 8, 115, 116, 117, 122, 123, 124, 206, 212) lesquelles sont disposées de telle sorte que, dans l'environnement du milieu filtrant (1, 112, 113, 114, 203) par connexion des électrodes (7, 8, 115, 116, 117, 122, 123, 124, 206, 212) avec une source de tension électrique (12, 121, 211) un champ électrique est apte à être établi, ce par quoi une force agissant sur la phase dispersée à l'encontre du sens principal de déplacement (4) du liquide (2) est apte à être provoquée.

20. Appareil de filtration selon la revendication 19, **caractérisé par le fait que** l'élément de support (202) est sous la forme d'un prisme ou sous la forme d'un cylindre et que le milieu filtrant (1, 203) revêt au moins en partie la surface latérale de l'élément de support (202).

21. Appareil de filtration selon la revendication 20, **caractérisé par le fait qu'**au moins une électrode (206) est disposée sous la forme d'une bague autour de l'élément de support (202).

22. Appareil de filtration selon la revendication 21, **caractérisé par le fait que** l'élément de support (101, 102, 103) est réalisé sous la forme d'une plaque, d'un disque ou d'une assiette, et présente deux faces frontales, et que le milieu filtrant (1, 112, 113, 114) recouvre au moins en partie au moins l'une des deux surfaces frontales.

23. Appareil de filtration selon la revendication 22, **caractérisé par le fait qu'**au moins une électrode (122) est réalisée également sous forme d'une plaque, d'un disque ou d'une assiette.

24. Appareil de filtration selon l'une des revendications 21 et 22, **caractérisé par le fait que** l'élément de support (101, 102, 103) est disposé horizontalement ou verticalement.

25. Appareil de filtration selon l'une des revendications 19 à 24, **caractérisé par le fait qu'**au moins une électrode est intégrée dans l'élément de support (101, 102, 103, 202).

26. Appareil de filtration selon l'une des revendications 19 à 25, **caractérisé par le fait que** l'appareil de filtration présente plusieurs éléments de support (101, 102, 103) montés en parallèle.

27. Utilisation d'un filtre-presse équipé d'au moins deux électrodes (7, 8) pour la mise en oeuvre d'un procédé tel que défini à l'une des revendications 6 à 17.

28. Utilisation d'un automate de filtre-presse équipé d'au moins deux électrodes (7, 8) pour la mise en oeuvre d'un procédé tel que défini à l'une des revendications 6 à 17.

29. Utilisation d'un entonnoir-filtre sous pression équipé d'au moins deux électrodes (7, 8) pour la mise en oeuvre d'un procédé tel que défini à l'une des revendications 6 à 17.
